# EUROPÄISCHE PATENTSCHRIFT

(11) **EP 2 408 554 B1**
(45) Veröffentlichungstag und Bekanntmachung des Hinweises auf die Patenterteilung: **14.12.2016**
(21) Anmeldenummer: 10707051.8
(22) Anmeldetag: 09.03.2010
(51) Int. Cl.: B01J 21/12, C01B 13/32, C01B 33/16, C01B 33/187, C01B 33/193

(54) **KATALYSATORTRÄGER AUF SILICAGEL-BASIS**
CATALYST CARRIER BASED ON SILICA GEL
SUPPORT DE CATALYSEUR À BASE DE GEL DE SILICE

(30) Priorität: 16.03.2009 EP 09155231
(43) Veröffentlichungstag der Anmeldung: 25.01.2012
(73) Patentinhaber: BASF SE, 67056 Ludwigshafen am Rhein (DE)
(72) Erfinder: SIEGEL, Angela, 31582 Nienburg/Weser (DE); ECKARDT, Tobias, 31582 Nienburg/Weser (DE); BRAEDIKOW, Andreas, 31582 Nienburg/Weser (DE); PUVOGEL, Thorsten, 31582 Nienburg/Weser (DE)
(74) Vertreter: BASF IP Association
(86) Internationale Anmeldenummer: PCT/EP2010/052965
(87) Internationale Veröffentlichungsnummer: WO 2010/105941

(56) Entgegenhaltungen:
- EP-A1- 0 653 378
- GB-A- 2 279 944
- US-A- 3 489 516
- LEE M-H ET AL: "Synthesis of spherical zirconia by precipitation between two water/Oil emulsions" JOURNAL OF THE EUROPEAN CERAMIC SOCIETY, ELSEVIER SCIENCE PUBLISHERS, BARKING, ESSEX, GB LNKD- DOI:10.1016/S0955-2219(99)00044-8, Bd. 19, Nr. 15, 1. November 1999 (1999-11-01), Seiten 2593-2603, XP004362792 ISSN: 0955-2219

## Beschreibung

Die vorliegende Erfindung betrifft sphärische Partikel enthaltend wenigstens ein Metall- oder Halbmetalloxid, wobei die Partikel einen Durchmesser von 10 bis 120 µm, eine BET-Oberfläche von 400 bis 800 m²/g und ein Porenvolumen von 0,3 bis 3,0 cm³/g aufweisen, der Durchmesser an keiner Stelle eines Partikels um mehr als 10% von dem durchschnittlichen Durchmesser des Partikels abweicht, und die Oberfläche des Partikels im Wesentlichen glatt ist, ein Verfahren zur Herstellung dieser sphärischen Partikel sowie die Verwendung von sphärischen Partikeln als Katalysatoren oder Katalysatorträger.

Die vorliegende Erfindung betrifft insbesondere sphärische Partikel enthaltend SiO₂ (Silica).

Silica-Teilchen bzw. Verfahren zu deren Herstellung sind aus dem Stand der Technik bereits bekannt. US 2,757,073 offenbart ein Verfahren zur Herstellung von pulverförmigem Kieselgel, in dem eine Dispersion eines Kieselgel-Sols in einem mit Wasser gesättigtem organischen Lösungsmittel, beispielsweise Butanol, vorgelegt wird, durch starkes Rühren, Tropfen des Kieselgel-Sols gebildet, und diese durch Zugabe von Ammoniak in Kieselgel überführt werden. Das so erhaltene Gel wird nach dem Aushärten in kleine Partikel gebrochen, mit Wasser und mit Aceton gewaschen, um im Wesentlichen das gesamte Wasser zu entfernen. US 2,757,073 offenbart des Weiteren, dass derartiges pulverförmiges Silica als Füllmittel in Materialien wie Gummi oder als Zwischenprodukt für die Herstellung von beschichteten Silica-Produkten verwendet werden kann. Der Durchmesser der so erhaltenen Silica-Partikel beträgt weniger als 50 nm.

US 2,921,839 offenbart ein Verfahren zur Herstellung von Silica-Teilchen durch Fällung. Dazu wird eine wässrige Lösung eines Alkalimetallsilikats mit einem organischen Lösungsmittel versetzt, und anschließend wird eine Säure zugegeben. Nach Abtrennen der organischen Phase werden die erhaltenen Silicagel-Partikel durch azeotrope Destillation getrocknet. Durch das Verfahren gemäß US 2,921,839 werden Kieselgel-Teilchen mit einem Durchmesser von 10 bis 1000 µm erhalten. US 2,921,839 offenbart keine Kieselgel-Teilchen, die sich durch eine besonders hohe Glattheit der Oberfläche der Partikel auszeichnen.

US 3,489,516 offenbart ein Verfahren zur Herstellung von Silica-Partikeln durch Polymerisation von xNa₂O · ySiO₂ in einer dispergierten organischen Phase in einem wässrigen Medium durch Zugabe einer Säure. Die so hergestellten Silica-Partikel weisen eine BET-Oberfläche von 700 bis 1100 m²/g bzw. 300 bis 600 m²/g auf. Diese Silica-Partikel können als Katalysatoren verwendet werden.

EP 0653378 A1 beschreibt ein Verfahren zur Herstellung von porösen sphärischen Silica-Teilchen.

Im Stand der Technik sind keine Silica-Teilchen bzw. Verfahren zu deren Herstellung beschrieben, die eine erfindungsgemäß besonders geeignete Kombination von Durchmesser, BET-Oberfläche, Porenvolumen, Polydispersität und Oberflächen-Glattheit aufweisen, welche diese Teilchen besonders geeignet für den Einsatz als Katalysatoren in Polymerisationsreaktionen, beispielsweise zur Herstellung von Polypropylen oder Polyethylen, erscheinen lässt. Des Weiteren ist im Stand der Technik kein Verfahren beschrieben, welches sphärische Partikel bereitstellt, die die genannte vorteilhafte Kombination der verschiedenen Parameter aufweisen.

Aufgabe der vorliegenden Erfindung ist es somit, sphärische Partikel bereitzustellen, die sich durch eine besonders vorteilhafte Kombination der genannten Parameter auszeichnen. Insbesondere sollen die sphärischen Partikel eine hohe Glattheit der Partikeloberfläche aufweisen, so dass sie besonders vorteilhaft als Katalysatoren in Polymerisationsreaktion eingesetzt werden können. Eine weitere Aufgabe ist ein Verfahren zur Herstellung solcher sphärischer Partikel.

Diese Aufgaben werden gelöst durch sphärische Partikel enthaltend wenigstens ein Metall- und/oder Halbmetalloxid, wobei die Partikel einen mittleren Durchmesser von 10 bis 120 µm, eine BET-Oberfläche von 400 bis 800 m²/g und ein Porenvolumen von 0,3 bis 3,0 cm³/g aufweisen, der Durchmesser an jeder Stelle eines bestimmten Partikels um weniger als 10% von dem durchschnittlichen Durchmesser dieses Partikels abweicht und die Oberfläche des Partikels im Wesentlichen glatt ist, wobei die sphärischen Partikel nach einem Verfahren erhältlich sind umfassend die Schritte (A) bis (F)

Diese Aufgaben werden des Weiteren gelöst durch ein Verfahren zur Herstellung dieser erfindungsgemäßen sphärischen Partikel, umfassend die Schritte:
(A) Bereitstellen einer Mischung enthaltend wenigstens ein nicht vollständig mit Wasser mischbares organisches Lösungsmittel, Wasser und wenigstens eine Vorläuferverbindung des wenigstens einen Metall- und/oder Halbmetalloxids als Mischung A,
(B) Bereitstellen einer Mischung enthaltend wenigstens ein nicht vollständig mit Wasser mischbares organisches Lösungsmittel, Wasser und wenigstens eine Säure als Mischung B,
(C) Vereinigen der Mischungen A und B und Umsetzung der wenigstens einen Vorläuferverbindung des wenigstens einen Metall- und/oder Halbmetalloxids mit der wenigstens einen Säure, um eine Mischung C, enthaltend eine wässrige Phase enthaltend die sphärischen Partikel und eine organische Phase zu erhalten,
(D) Abtrennen der organischen Phase aus der in C erhaltenen Mischung C, um eine wässrige Phase enthaltend die sphärischen Partikel zu erhalten,
(E) gegebenenfalls Behandeln der in Schritt (D) erhaltenen sphärischen Partikel mit wenigstens einer Säure und
(F) Trocknen der in Schritt (D) oder (E) erhaltenen sphärischen Partikel.

Die genannten Aufgaben werden auch durch die Verwendung der erfindungsgemäßen sphärischen Partikel als Katalysatoren oder Katalysatorträger gelöst.

Die erfindungsgemäßen sphärischen Partikel enthalten wenigstens ein Metall- und/oder Halbmetalloxid.

In einer bevorzugten Ausführungsform ist das wenigstens eine Metall- und/oder Halbmetalloxid ausgewählt aus der Gruppe bestehend aus SiO₂, Al₂O₃, TiO₂, MgO und Mischungen davon. In einer besonders bevorzugten Ausführungsform enthalten die erfindungsgemäßen sphärischen Partikel SiO₂. Ganz besonders bevorzugt bestehen die erfindungsgemäßen sphärischen Partikel aus wenigstens 96 Gew.-%, insbesondere wenigstens 98 Gew.-%, SiO₂. Die verbleibenden Gewichtsprozente können auf geringe Mengen weiterer Metalle wie Aluminium, Natrium, Eisen und Mischungen davon, sowie Anionen wie Sulfat und/oder Chlorid entfallen. Diese neben SiO₂ vorliegenden Komponenten sind jeweils in einer Menge von weniger als 0,1 Gew.-%, vorhanden.

Das wenigstens eine Metall- und/oder Halbmetalloxid ist im Wesentlichen amorph, d. h., dass das wenigstens eine Metall- und/oder Halbmetalloxid zu wenigstens 80%, besonders bevorzugt zu wenigstens 90%, amorph ist. Der Anteil an amorphen Bereichen kann nach dem Fachmann bekannten Verfahren bestimmt werden, beispielsweise durch Röntgenbeugung (XRD).

Die erfindungsgemäßen sphärischen Partikel weisen im Allgemeinen eine BET-Oberfläche von 400 bis 800 m²/g, bevorzugt eine BET-Oberfläche von 500 bis 600 m²/g, insbesondere bevorzugt eine BET-Oberfläche von 520 bis 580 m²/g, auf. Die BET-Oberfläche kann nach dem Fachmann bekannten Verfahren bestimmt werden, beispielsweise durch N₂-Physisorptionsmessungen.

Die erfindungsgemäßen sphärischen Partikel weisen im Allgemeinen einen mittleren Durchmesser von 10 bis 120 µm, bevorzugt einen mittleren Durchmesser von 30 bis 100 µm, ganz besonders bevorzugt einen mittleren Durchmesser von 40 bis 90 µm, auf. Im Rahmen der vorliegenden Erfindung bedeutet "mittlerer Durchmesser", den Durchmesser, gemittelt über alle in einer Probe vorliegenden Partikel.

Der D₁₀-Wert der erfindungsgemäßen sphärischen Teilchen beträgt im Allgemeinen 5 bis 30 µm, bevorzugt 10 bis 25 µm, besonders bevorzugt 12 bis 20 µm. Der D₅₀-Wert der erfindungsgemäßen sphärischen Teilchen beträgt im Allgemeinen 30 bis 70 µm, bevorzugt 40 bis 65 µm, besonders bevorzugt 50 bis 60 µm. Der D₉₀-Wert der erfindungsgemäßen sphärischen Teilchen beträgt im Allgemeinen 50 bis 140 µm, bevorzugt 75 bis 120 µm, besonders bevorzugt 80 bis 100 µm.

Die angegebenen Werte D₁₀, D₅₀ bzw. D₉₀ besagen, dass 10%, 50% bzw. 90% der gemessenen Teilchen einen kleineren Durchmesser als den angegebenen Durchmesser aufweisen. Verfahren zur Bestimmung des mittleren Durchmessers der sphärischen Partikel sind dem Fachmann bekannt, beispielsweise Laserbeugung nach Fraunhofer oder Mie.

Die erfindungsgemäßen sphärischen Partikel sind nach einem Verfahren erhältlich umfassend die Schritte (A) bis (F).

Die erfindungsgemäßen sphärischen Partikel weisen im Allgemeinen ein Porenvolumen von 0,3 bis 3,0 cm³/g, bevorzugt 0,8 bis 2,5 cm³/g, ganz besonders bevorzugt 1,5 bis 2,2 cm³/g, auf. Verfahren zur Bestimmung des Porenvolumens der sphärischen Partikel sind dem Fachmann bekannt, beispielsweise N₂-Physisorptions- und Hg-Porosimetriemessungen.

Die erfindungsgemäßen sphärischen Partikel sind im Wesentlichen monodispers, d. h. die sphärischen Partikel weisen bevorzugt eine enge Teilchengrößenverteilung auf, was durch die angegebenen D₁₀-, D₅₀- und D₉₀-Werte deutlich wird.

Die erfindungsgemäßen sphärischen Partikel zeichnen sich durch eine besonders ausgeprägte und gleichmäßige Kugelform aus. Der Durchmesser eines bestimmten erfindungsgemäßen sphärischen Partikels weicht an jeder Stelle dieses Partikels um weniger als 10%, bevorzugt weniger als 5%, besonders bevorzugt weniger als 2%, von dem durchschnittlichen Durchmesser dieses Partikels, ab. Im Rahmen der vorliegenden Erfindung bedeutet "durchschnittlicher Durchmesser", den Durchmesser, gemittelt über alle in einem Partikel vorliegenden Durchmesser. Für den Idealfall einer vollkommen gleichmäßigen Kugel gibt es für jeden Partikel nur einen Durchmesser. Die Kugelform der erfindungsgemäßen Partikel kann durch REM-Aufnahmen bestimmt werden.

Die erfindungsgemäßen sphärischen Partikel zeichnen sich des Weiteren dadurch aus, dass die Oberfläche der sphärischen Partikel im Wesentlichen glatt ist. "Glatt" bedeutet im Rahmen der vorliegenden Erfindung, dass die Oberfläche der erfindungsgemäßen sphärischen Partikel keine Unregelmäßigkeiten wie Dellen, Spalten, Verwürfe, Risse, Ausstülpungen, Kerben, etc. aufweist. Die Glattheit der erfindungsgemäßen Teilchen kann beispielsweise durch REM-Aufnahmen bestimmt werden.

Die vorliegende Erfindung betrifft auch ein Verfahren zur Herstellung der erfindungsgemäßen sphärischen Partikel, umfassend die Schritte (A) bis (F).

### Schritt (A):

Schritt (A) umfasst das Bereitstellen einer Mischung enthaltend wenigstens ein nicht vollständig mit Wasser mischbares organisches Lösungsmittel, Wasser und wenigstens eine Vorläuferverbindung des wenigstens einen Metall- und/oder Halbmetalloxids als Mischung A.

Das wenigstens eine nicht vollständig mit Wasser mischbare organische Lösungsmittel ist ausgewählt aus der Gruppe bestehend aus Ketonen, Ethern, Alkoholen, beispielsweise Butanole, wie n-Butanol, iso-Butanol, tert.-Butanol, pflanzliche Öle, Silikonöle, Mineralöle und Mischungen davon. Insbesondere bevorzugt ist n-Butanol. In einer bevorzugten Ausführungsform wird in Schritt (A) des erfindungsgemäßen Verfahrens wenigstens ein zumindest teilweise mit Wasser mischbares organisches Lösungsmittel eingesetzt, welches mit Wasser gesättigt ist.

Erfindungsgemäß enthält die in Schritt (A) des erfindungsgemäßen Verfahrens bereitgestellte Mischung A Wasser. Dieses Wasser kann ausgewählt sein aus Leitungswasser, Trinkwasser, destilliertem Wasser, entmineralisiertem Wasser, bevorzugt wird destilliertes Wasser verwendet.

Das Volumen-Verhältnis von wenigstens einem nicht vollständig mit Wasser mischbaren organischen Lösungsmittel zu Wasser beträgt in Mischung A im Allgemeinen 5: 1 bis 1 : 1, bevorzugt 4 :1 bis 2 : 1. In einer besonders bevorzugten Ausführungsform wird das wenigstens eine organische Lösungsmittel vorgelegt, und die wenigstens eine Vorläuferverbindung des wenigstens einen Metall- oder Halbmetalloxides wird in wässriger Lösung zugegeben, so dass die Mischung A resultiert.

Als wenigstens eine Vorläuferverbindung des wenigstens einen Metall- und/oder Halbmetalloxids kann in Schritt (A) des erfindungsgemäßen Verfahrens jede Verbindung eingesetzt werden, die durch Umsetzung mit wenigstens einer Säure in das entsprechende Metall- und/oder Halbmetalloxid überführt werden kann. Für den bevorzugten Fall, dass das Halbmetalloxid Siliciumdioxid ist, wird als Vorläuferverbindung bevorzugt Natriumsilicat xNa₂O · ySiO₂ (Wasserglas) eingesetzt. In einer weiteren bevorzugten Ausführungsform des erfindungsgemäßen Verfahrens wird in Schritt (A) eine Natriumsilikatlösung verwendet, in der das Molverhältnis SiO₂ : Na₂O im Allgemeinen 1 bis 6, bevorzugt 2 bis 5, besonders bevorzugt 3 bis 4, beispielsweise 3,4, beträgt.

Weitere geeignete Vorläuferverbindungen sind ausgewählt aus der Gruppe bestehend aus Alkalisilicaten, beispielsweise Kaliumsilicat, Erdalkalisilicaten, kolloidalen Silicasolen und Mischungen davon.

In einer bevorzugten Ausführungsform des erfindungsgemäßen Verfahrens ist die wenigstens eine Vorläuferverbindung des wenigstens einen Metall- und/oder Halbmetalloxids ausgewählt aus der Gruppe bestehend aus Alkalisilicaten, beispielsweise Kaliumsilicat und/oder Natriumsilicat, Erdalkalisilicaten, kolloidalen Silicasolen und Mischungen davon.

In einer besonders bevorzugten Ausführungsform wird eine wässrige Wasserglaslösung, d. h. eine wässrige Lösung von xNa₂O · ySiO₂ in H₂O, mit einer Dichte von 1,1 bis 1,35 g/cm³, insbesondere 1,14 bis 1,32 g/cm³, in Schritt (A) des erfindungsgemäßen Verfahrens eingesetzt. Die wenigstens eine Vorläuferverbindung des wenigstens einen Metall- und/oder Halbmetalloxids wird in Mischung A in einer Konzentration von 1,5 bis 4,5 mol *l⁻¹, eingesetzt.

Schritt (A) des erfindungsgemäßen Verfahrens kann im Allgemeinen bei jeder Temperatur durchgeführt werden, bei der die einzelnen Komponenten verarbeitbar bzw. löslich sind. Bevorzugt wird in Schritt (A) ein zweiphasiges Gemisch erhalten. Die Temperatur in Schritt (A) beträgt beispielsweise 10 bis 80 °C, bevorzugt 15 bis 40 °C, besonders bevorzugt Umgebungstemperatur.

### Schritt (B):

Schritt (B) des erfindungsgemäßen Verfahrens umfasst das Bereitstellen einer Mischung enthaltend wenigstens ein nicht vollständig mit Wasser mischbares organisches Lösungsmittel, Wasser und wenigstens eine Säure als Mischung B.

In Schritt (B) des erfindungsgemäßen Verfahrens können alle nicht vollständig mit Wasser mischbaren organischen Lösungsmittel eingesetzt werden, die bereits bezüglich Schritt (A) genannt worden sind, bevorzugt wird in Schritt (B) n-Butanol eingesetzt. Weiterhin bevorzugt wird in Schritt (B) wenigstens ein nicht vollständig mit Wasser mischbares Lösungsmittel eingesetzt, dass mit Wasser gesättigt ist.

Die Mischung B enthält wenigstens eine Säure. Im Allgemeinen sind alle Säuren einsetzbar, die in einer Mischung enthaltend wenigstens ein nicht vollständig mit Wasser mischbares organisches Lösungsmittel und Wasser löslich sind, und die die in Schritt (A) eingesetzte wenigstens eine Vorläuferverbindung des wenigstens einen Metall- und/oder Halbmetalloxids in das entsprechende Metall- und/oder Halbmetalloxid überführen können. In einer bevorzugten Ausführungsform ist die wenigstens eine Säure ausgewählt aus der Gruppe bestehend aus anorganischen Säuren wie Salzsäure, Salpetersäure, Schwefelsäure, schwefelige Säure, Phosphorsäure, phosphorige Säure oder organischen Säuren wie Ameisensäure, Essigsäure, Propionsäure, Buttersäure, und Mischungen davon. In einer besonders bevorzugten Ausführungsform wird Schwefelsäure verwendet. Wie in Schritt (A) kann Leitungswasser, Trinkwasser, destilliertes Wasser oder entmineralisiertes Wasser eingesetzt werden, bevorzugt wird destilliertes Wasser eingesetzt.

In einer bevorzugten Ausführungsform wird die Mischung B in Schritt (B) hergestellt, indem eine wässrige Lösung der wenigstens einen Säure mit dem wenigstens einen organischen Lösungsmittel versetzt wird. Diese wässrige Lösung der Säure weist eine Konzentration an Säure von 2 bis 20 Gew.-%, besonders bevorzugt 3 bis 15 Gew.-%, insbesondere bevorzugt 4 bis 10 Gew.-%, auf.

Das Volumenverhältnis von wenigstens einem zumindest teilweise mit Wasser mischbaren organischen Lösungsmittel zu Wasser beträgt in Mischung B im Allgemeinen 5 : 1 bis 1 : 1, bevorzugt 4 : 1 bis 2 : 1.

Schritt (B) wird im Allgemeinen bei 10 bis 80 °C, bevorzugt 15 bis 40 °C, besonders bevorzugt beim Umgebungstemperatur, durchgeführt.

### Schritt (C):

Schritt (C) umfasst das Vereinigen der Mischungen A und B und Umsetzung der wenigstens einen Vorläuferverbindung des wenigstens einen Metall- und/oder Halbmetalloxids mit der wenigstens einen Säure, um eine Mischung C, enthaltend eine wässrige Phase enthaltend die sphärischen Partikel und eine organischen Phase, zu erhalten.

Das Vereinigen in Schritt (C) des erfindungsgemäßen Verfahrens kann durch alle dem Fachmann bekannten Vorgehensweisen erfolgen. In einer bevorzugten Ausführungsform werden die Mischungen A und B gleichzeitig in einen Reaktor, beispielsweise einen Kolben oder ein Reaktionsrohr, eingebracht und somit vereint.

Die Umsetzung der wenigstens einen Vorläuferverbindung des wenigstens einen Metall- und/oder Halbmetalloxids mit der wenigstens einen Säure resultiert in der Bildung des wenigstens einen Metall- und/oder Halbmetalloxids. Für den bevorzugten Fall der Bildung von SiO₂ aus xNa₂O · ySi02 und H₂SO₄ (aq.), findet die folgende Reaktion statt:

xNa₂O · ySi02 + H₂SO₄ (aq.) ergibt SiO₂ + N₂SO₄ + H₂O

Schritt (C) des erfindungsgemäßen Verfahrens wird bevorzugt kontinuierlich, beispielsweise in einem Strömungsrohr, durchgeführt. Schritt (C) wird im Allgemeinen bei einer Temperatur von 10 bis 80 °C, bevorzugt 15 bis 40 °C, besonders bevorzugt Umgebungstemperatur, durchgeführt.

Nach erfolgter Umsetzung der wenigstens einen Vorläuferverbindung und der wenigstens einen Säure liegen die sphärischen Partikel in dispergierter Form in der Mischung C vor.

### Schritt (D):

Schritt (D) umfasst das Abtrennen der organischen Phase aus der in Schritt (C) erhaltenen Mischung C, um eine wässrige Phase enthaltend die sphärischen Partikel zu erhalten.

Das Abtrennen der organischen Phase von Mischung C in Schritt (D) des erfindungsgemäßen Verfahrens kann nach allen dem Fachmann bekannten Methoden erfolgen, beispielsweise Abdekantieren, Absaugen, Ablassen der unteren Phase durch ein Bodenventil etc. Die Wahl der passenden Methode ist unter anderem davon abhängig, ob ein organisches Lösungsmittel eingesetzt wird, welches eine Dichte aufweist, die größer oder kleiner als 1g/ml ist, d. h. ob sich die organische Phase über oder unter der wässrigen Phase befindet.

In einer bevorzugten Ausführungsform umfasst die Mischung C eine obere organische Phase und eine untere wässrige Phase, in der die erfindungsgemäßen sphärischen Partikel in dispergierter Form vorliegen. In einer bevorzugten Ausführungsform erfolgt Schritt (D) durch Absaugen bzw. Abgießen der oberen organischen Phase, um eine wässrige Phase enthaltend die sphärischen Teilchen zu erhalten. Die nach Schritt (D) erhaltene wässrige Phase kann noch Reste des wenigstens einen organischen Lösungsmittels enthalten, beispielsweise bis zu 15 Gew.-%, bevorzugt bis zu 10 Gew.-%.

In einer bevorzugten Ausführungsform des erfindungsgemäßen Verfahrens wird nach Schritt (D) die wässrige Phase enthaltend die sphärischen Partikel durch Zugabe eines geeigneten Reagenzes auf einen neutralen pH-Wert, d. h. pH 6 bis 8, eingestellt. In einer bevorzugten Ausführungsform erfolgt dies durch Zugabe einer Säure, beispielsweise eine Mineralsäure wie Schwefelsäure. Die Säure wird bevorzugt als wässrige Lösung mit einer Konzentration von 20 bis 60 Gew.-%, bevorzugt 30 bis 50 Gew.-%, eingesetzt.

An die Neutralisation schließt sich in einer bevorzugten Ausführungsform ein Alterungsschritt an. Dazu werden die in Wasser dispergierten sphärischen Partikel für eine bestimmte Zeit, beispielsweise 1 bis 5 Stunden, bevorzugt 2 bis 4 Stunden, auf eine Temperatur von 40 bis 95 °C, bevorzugt 50 bis 90 °C, erhitzt.

### Schritt (E):

Der optionale Schritt (E) des erfindungsgemäßen Verfahrens umfasst das Behandeln der in Schritt (D) erhaltenen sphärischen Partikel mit wenigstens einer Säure.

Schritt (E) des erfindungsgemäßen Verfahrens dient unter anderem dazu, Salze, die aus der Herstellung der sphärischen Partikel resultieren und sich auf und in den Partikeln befinden, beispielsweise Na₂SO₄, zu entfernen.

In einer bevorzugten Ausführungsform wird in dem optionalen Schritt (E) zunächst das über den sphärischen Teilchen stehende Wasser nach dem Fachmann bekannten Verfahren abgetrennt, beispielsweise durch Abdekantieren, Absaugen etc.

Bevorzugt werden die sphärischen Teilchen anschließend mit einer wässrigen Lösung einer Säure behandelt. Geeignete Säuren sind ausgewählt aus der Gruppe bestehend aus anorganischen Säuren wie Salzsäure, Salpetersäure, Schwefelsäure, schwefelige Säure, Phosphorsäure, phosphorige Säure oder organischen Säuren wie Ameisensäure, Essigsäure, Propionsäure, Buttersäure und Mischungen davon, insbesondere Schwefelsäure. Die wässrige Lösung in dem optionalen Schritt (E) ist bevorzugt niedrig konzentriert, beispielsweise 0,1 bis 5 Gew.-%, bevorzugt 0,75 bis 2 Gew.-%. Nach Zugabe der sauren Lösung wird die erhaltene Mischung bevorzugt homogen durchmischt, beispielsweise durch Rühren mit dem Fachmann bekannten Vorrichtungen. Anschließend wird die erhaltene Mischung für eine bestimmte Zeit, beispielsweise 0,25 bis 2 h, bevorzugt 0,25 bis 1 h, ruhig stehen gelassen. Anschließend wird die überstehende saure Lösung bevorzugt wieder entfernt, beispielsweise durch Abdekantieren und/oder Absaugen. Die Sequenz Säurezugabe - Rühren - Stehen lassen - Säure abtrennen wird mehrfach, beispielsweise 2 bis 10 Mal, wiederholt.

Bevorzugt werden die erhaltenen sphärischen Teilchen anschließend nach dem Fachmann bekannten Verfahren von störenden Komponenten, beispielsweise Säure, organisches Lösungsmittel und/oder bei der Bildung des wenigstens einen Metall- oder Halbmetalloxides gebildeten Nebenprodukten, befreit.

### Schritt (F):

Schritt (F) des erfindungsgemäßen Verfahrens umfasst das Trocknen der in Schritt (D) oder (E) erhaltenen sphärischen Partikel.

Das Trocknen kann nach allen dem Fachmann bekannten Methoden erfolgen, beispielsweise in einem Trockenschrank bei einer Temperatur von 100 bis 300 °C, bevorzugt 150 bis 250 °C. Schritt (F) des erfindungsgemäßen Verfahrens kann bei Atmosphärendruck oder bei einem niedrigeren Druck, beispielsweise weniger als 800 mbar, bevorzugt weniger als 600 mbar, durchgeführt werden.

Schritt (F) wird solange durchgeführt, bis die sphärischen Partikel einen Wassergehalt aufweisen, der für die spätere Anwendung gering genug ist, beispielsweise 0,2 bis 0,8 Gew.-%, ist. Dieser Wassergehalt kann als Trocknungsverlust bei 200 °C bestimmt werden.

Die erfindungsgemäß hergestellten sphärischen Partikel zeichnen sich durch eine besonders vorteilhafte Kombination von Merkmalen wie Durchmesser, BET-Oberfläche, Porenvolumen, Glattheit und Monodispersität aus. Insbesondere die ausgeprägte Kugelform und Glattheit ergeben bei Verwendung der sphärischen Partikel als Katalysatorträger in Polymerisationen die Ausbildung besonders monodisperser und kugelförmige Polymerteilchen.

Daher sind diese erfindungsgemäßen sphärischen Partikel insbesondere als Katalysatoren bzw. Katalysatorträger geeignet. Dazu werden auf die erfindungsgemäßen Teilchen gegebenenfalls katalytisch aktive Metalle, beispielsweise ausgewählt aus der Gruppe bestehend aus Chrom, Magnesium, Titan, Platin, Palladium, Iridium, Nickel, Zirkonium, Zink, Kupfer Molybdän, Scandium und Mischungen davon, in dem Fachmann bekannten Mengen, beispielsweise 0,1 bis 20 Gew.-%, bevorzugt 0,4 bis 5 Gew.-%, bezogen auf das gesamte Teilchen, aufgebracht. Art und Menge des katalytisch aktiven Metalls ist dabei im Allgemeinen abhängig von der gewünschten Anwendung und dem Fachmann bekannt.

Die vorliegende Erfindung betrifft somit auch einen teilchenförmigen Katalysator enthaltend die erfindungsgemäßen sphärischen Partikel und wenigstens ein katalytisch aktives Metall. Das wenigstens eine katalytisch aktive Metall liegt dabei bevorzugt in einer Menge von 0,1 bis 20 Gew.-%, bevorzugt 0,4 bis 5 Gew.-%, jeweils bezogen auf den gesamten teilchenförmigen Katalysator, vor.

Die vorliegende Erfindung betrifft auch die Verwendung der erfindungsgemäßen sphärischen Partikeln als Katalysatoren oder Katalysatorträger, insbesondere bei Polymerisationsreaktionen, beispielsweise zur Herstellung von Polyethylen, Polypropylen oder anderen Spezialpolymeren.

### Figuren:

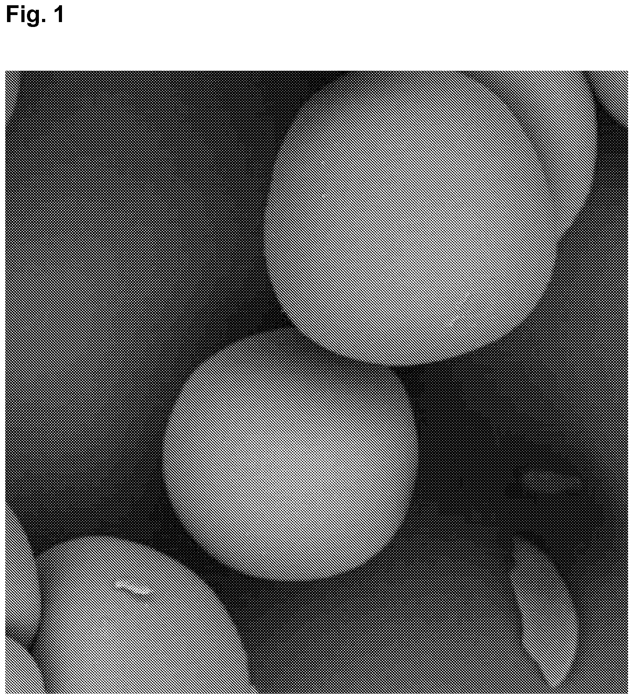

Figur 1 zeigt erfindungsgemäße sphärische Partikel als Photo eines Rasterelektronenmikroskops.

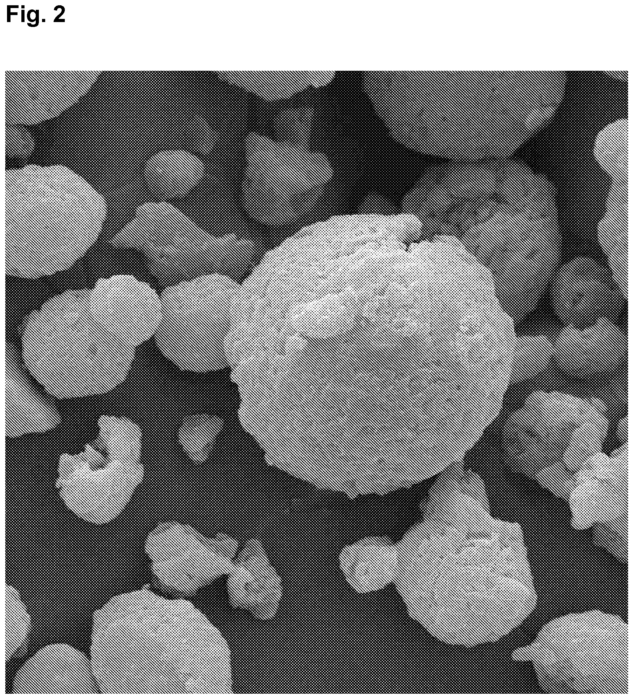

Figur 2 zeigt vergleichsweise ein typisches sprühgetrocknetes Silicagel gemäß Stand der Technik.

### Beispiele:

### Geräte:

- zwei explosionsgeschützte Druckluftrührwerke vom Typ PLR 11T der Firma Buddeberg
- zwei Rührorgane vom Typ ViscoJet 120 mm
- zwei 10 Liter Doppelmantelglasreaktoren mit Kühlwasser- und Schutzgasanschluss
- eine Schlauchpumpe mit 2 Kanälen, Zum Mischen der in den beiden Doppelmantelglasreaktoren vorgelegten Substrate
- mehrere 10 Liter Vorlagegefäße
- 10 Liter Glasflasche

### Chemikalien:

1. 2 Liter 5,2% Schwefelsäure
2. 2 Liter Wasserglaslösung mit einer Dichte von 1.269 g/cm³
3. 2 mal 6 Liter n-Butanol, technische Qualität, wassergesättigt
4. Schwefelsäure ca. 40% zur Neutralisation
5. ca. 10 Liter 1 %ige Schwefelsäure

### Durchführung:

### Fällung:

Nach dem Füllen der Doppelmantelreaktoren mit jeweils 6 Litern n-Butanol werden die Rührwerke auf ca. 500 Umin-1 geregelt. Anschließend wird in einen Behälter die verdünnte Schwefelsäure, in den anderen die Wasserglaslösung zugegeben. Nach vollständiger Zugabe und Emulsionsbildung wird die Umdrehungszahl der beiden Rührwerke auf ca. 300 Umin⁻¹ gesenkt. Mittels einer Pumpe werden die, auf die beschriebene Art vorbereiteten Emulsionen, aus den Vorlagebehältern in einem Schlauch zusammengeführt und anschließend in eine mobile Vorlage entleert.

Nach der Fällung wird das Gemisch aus n-Butanol und Silikagel getrennt. Durch Zugabe 40%iger Schwefelsäure wird der pH-Wert der Silikagelmasse umgehend auf den Bereich zwischen 6.5 und 7.5 eingestellt.

### Alterung:

Das neutralisierte Silikagel wird in eine 10 Liter Glasflasche gegeben und in ein 80 °C warmes Wasserbad für ca. 2,5 Stunden überführt.

### Ionentausch und Waschen:

Nach dem Absaugen der über dem Silikagel stehenden Flüssigkeit wird eine 1%ige H₂SO₄-Lsg. (möglich ist ein breiter Konzentrationsbereich von 0,5 bis 15 %) zugegeben. Nach Ablauf einer Stunde wird wiederum die überstehende Lösung abgesaugt und anschließend das Silikagel erneut mit 1 %iger H₂SO₄-Lsg. versetzt. Dieser Vorgang wird bis zu fünf Mal wiederholt, bevor das Silikagel mit Wasser versetzt wird. Dieser Vorgang wird wiederholt

Die Abtrennung der erhaltenen sphärischen Partikel erfolgt durch Absaugen der überstehenden Flüssigkeit.

### Trocknung:

Die Trocknung des Silikagels erfolgt bei 170 °C im Trockenschrank.

### Analysendaten:

Chemische Zusammensetzung der sphärischen Teilchen (gemessen mittels XRF nach DIN 51418):
SiO₂ > 98%
Spuren von Al, Na, Fe, Sulfat und Chlorid (jeweils < 0,01%)

### Allgemein:

| Farbe | weiß |
|---|---|
| Schüttdichte | 0.18 kg/l (gemessen nach DIN 8948/7.6) |

### Partikelgrößenverteilung (gemessen nach ISO 13320):

Alle Angaben gelten für ungesiebtes bzw. ungesichtetes Material.
D₁₀ = 16 µm
D₅₀ = 55 µm
D₉₀ = 96 µm

BET-Oberfläche und Porenvolumen (gemessen nach DIN 66134):
BET-Oberfläche (getrocknetes Hydrogel): 550 m²/g
Porenvolumen für getrocknetes Hydrogel: 1,7 cm³/g

## Patentansprüche

1. Sphärische Partikel enthaltend wenigstens ein Metall- und/oder Halbmetalloxid, **dadurch gekennzeichnet, dass** die Partikel einen mittleren Durchmesser von 10 bis 120 µm, eine BET-Oberfläche von 400 bis 800 m²/g und ein Porenvolumen von 0,3 bis 3,0 cm³/g aufweisen, der Durchmesser eines bestimmten Partikels an jeder Stelle dieses Partikels um weniger als 10% von dem durchschnittlichen Durchmesser dieses Partikels abweicht und die Oberfläche des Partikels im Wesentlichen glatt ist, wobei die sphärischen Partikel nach einem Verfahren erhältlich sind umfassend die Schritte:
(A) Bereitstellen einer Mischung enthaltend wenigstens ein nicht vollständig mit Wasser mischbares organisches Lösungsmittel. Wasser und wenigstens eine Vorläuferverbindung des wenigstens einen Metall- und/oder Halbmetalloxids als Mischung A,
(B) Bereitstellen einer Mischung enthaltend wenigstens ein nicht vollständig mit Wasser mischbares organisches Lösungsmittel, Wasser und wenigstens eine Säure als Mischung B,
(C) Vereinigen der Mischungen A und B und Umsetzung der wenigstens einen Vorläuferverbindung des wenigstens einen Metall- und/oder Halbmetalloxids mit der wenigstens einen Säure, um eine Mischung C, enthaltend eine wässrige Phase enthaltend die sphärischen Partikel und eine organische Phase zu erhalten,
(D) Abtrennen der organischen Phase aus der in Schritt C erhaltenen Mischung C, um eine wässrige Phase enthaltend die sphärischen Partikel zu erhalten,
(E) gegebenenfalls Behandeln der in Schritt (D) erhaltenen sphärischen Partikel mit wenigstens einer Säure und
(F) Trocknen der in Schritt (D) oder (E) erhaltenen sphärischen Partikel.

2. Partikel nach Anspruch 1, **dadurch gekennzeichnet, dass** das wenigstens eine Metall- und/oder Halbmetalloxid ausgewählt ist aus der Gruppe bestehend aus SiO₂, Al₂O₃, TiO₂, MgO und Mischungen davon.

3. Partikel nach Anspruch 1 oder 2, **dadurch gekennzeichnet, dass** er zu wenigstens 96 Gew.-% aus SiO₂ besteht.

4. Partikel nach einem der Ansprüche 1 bis 3, **dadurch gekennzeichnet, dass** das wenigstens eine Metall- und/oder Halbmetalloxid im Wesentlichen amorph ist.

5. Partikel nach einem der Ansprüche 1 bis 4, **dadurch gekennzeichnet, dass** die BET-Oberfiäche 500 bis 600 m²/g beträgt.

6. Partikel nach einem der Ansprüche 1 bis 5, **dadurch gekennzeichnet, dass** das Porenvolumen 1,5 bis 2,5 cm³/g beträgt.

7. Verfahren zur Herstellung von sphärischen Partikel nach einem der Ansprüche 1 bis 6, umfassend die Schritte:
(A) Bereitstellen einer Mischung enthaltend wenigstens ein nicht vollständig mit Wasser mischbares organisches Lösungsmittel, Wasser und wenigstens eine Vorläuferverbindung des wenigstens einen Metall- und/oder Halbmetalloxids als Mischung A,
(B) Bereitstellen einer Mischung enthaltend wenigstens ein nicht vollständig mit Wasser mischbares organisches Lösungsmittel, Wasser und wenigstens eine Säure als Mischung B,
(C) Vereinigen der Mischungen A und B und Umsetzung der wenigstens einen Vorläuferverbindung des wenigstens einen Metall- und/oder Halbmetalloxids mit der wenigstens einen Säure, um eine Mischung C, enthaltend eine wässrige Phase enthaltend die sphärischen Partikel und eine organische Phase zu erhalten,
(D) Abtrennen der organischen Phase aus der in Schritt C erhaltenen Mischung C, um eine wässrige Phase enthaltend die sphärischen Partikel zu erhalten,
(E) gegebenenfalls Behandeln der in Schritt (D) erhaltenen sphärischen Partikel mit wenigstens einer Säure und
(F) Trocknen der in Schritt (D) oder (E) erhaltenen sphärischen Partikel.

8. Partikel nach einem der Ansprüche 1 bis 6 oder Verfahren nach Anspruch 7, **dadurch gekennzeichnet, dass** die wenigstens eine Vorläuferverbindung des wenigstens einen Metall- und/oder Halbmetalloxids ausgewählt ist aus der Gruppe bestehend aus Alkalisilicaten, beispielsweise Kaliumsilicat und/oder Natriumsilicat, Erdalkalisilicaten, kolloidalen Silicasolen und Mischungen davon.

9. Teilchenförmiger Katalysator enthaltend die sphärischen Partikel gemäß einem der Ansprüche 1 bis 6 und wenigstens ein katalytisch aktives Metall.

10. Verwendung von sphärischen Partikeln nach einem der Ansprüche 1 bis 6 als Katalysatoren oder Katalysatorträger.

## Claims

1. Spherical beads comprising at least one metal and/or semimetal oxide, having a mean diameter in the range from 10 to 120 µm, a BET surface area in the range from 400 to 800 m²/g and a pore volume in the range from 0.3 to 3.0 cm³/g, wherein the diameter of any one bead at any one point of said bead deviates by less than 10% from the average diameter of said bead and the surface of said bead is substantially smooth, where the spherical beads are obtainable by a process comprising the steps of
(A) providing a mixture comprising at least one incompletely water-miscible organic solvent, water and at least one precursor compound to said at least one metal and/or semimetal oxide as mixture A,
(B) providing a mixture comprising at least one incompletely water-miscible organic solvent, water and at least one acid as mixture B,
(C) combining said mixtures A and B and reacting said at least one precursor compound to said at least one metal and/or semimetal oxide with said at least one acid to obtain a mixture C comprising an aqueous phase comprising said spherical beads and an organic phase,
(D) separating said organic phase from said mixture C obtained in step C to obtain an aqueous phase comprising said spherical beads,
(E) optionally treating said spherical beads obtained in step (D) with at least one acid, and
(F) drying said spherical beads obtained in step (D) or (E).

2. The beads according to claim 1 wherein said at least one metal and/or semimetal oxide is selected from the group consisting of SiO₂, Al₂O₃, TiO₂, MgO and mixtures thereof.

3. The beads according to claim 1 or 2 wherein said any one bead consists of SiO₂ to an extent of not less than 96% by weight.

4. The beads according to any one of claims 1 to 3 wherein said at least one metal and/or semimetal oxide is substantially amorphous.

5. The beads according to any one of claims 1 to 4 wherein the BET surface area is in the range from 500 to 600 m²/g.

6. The beads according to any one of claims 1 to 5 wherein the pore volume is in the range from 1.5 to 2.5 cm³/g.

7. A process for producing spherical beads according to any one of claims 1 to 6, comprising the steps of
(A) providing a mixture comprising at least one incompletely water-miscible organic solvent, water and at least one precursor compound to said at least one metal and/or semimetal oxide as mixture A,
(B) providing a mixture comprising at least one incompletely water-miscible organic solvent, water and at least one acid as mixture B,
(C) combining said mixtures A and B and reacting said at least one precursor compound to said at least one metal and/or semimetal oxide with said at least one acid to obtain a mixture C comprising an aqueous phase comprising said spherical beads and an organic phase,
(D) separating said organic phase from said mixture C obtained in step C to obtain an aqueous phase comprising said spherical beads,
(E) optionally treating said spherical beads obtained in step (D) with at least one acid, and
(F) drying said spherical beads obtained in step (D) or (E).

8. The beads according to any one of claims 1 to 6 or the process according to claim 7 wherein said at least one precursor compound to said at least one metal and/or semimetal oxide is selected from the group consisting of alkali metal silicates, for example potassium silicate and/or sodium silicate, alkaline earth metal silicates, colloidal silica sols and mixtures thereof.

9. A particulate catalyst comprising said spherical beads according to any one of claims 1 to 6 and at least one catalytically active metal.

10. The use of spherical beads according to any one of claims 1 to 6 as catalysts or catalyst carriers.

## Revendications

1. Particules sphériques contenant au moins un oxyde de métal et/ou de semi-métal, **caractérisées en ce que** les particules présentent un diamètre moyen de 10 à 120 µm, une surface BET de 400 à 800 m²/g et un volume poreux de 0,3 à 3,0 cm³/g, le diamètre d'une particule déterminée à chaque emplacement de cette particule différant de moins de 10 % du diamètre moyen de cette particule, et la surface des particules étant essentiellement lisse, les particules sphériques pouvant être obtenues par un procédé comprenant les étapes suivantes :
(A) la préparation d'un mélange contenant au moins un solvant organique non complètement miscible avec l'eau, de l'eau et au moins un composé précurseur dudit au moins un oxyde de métal et/ou de semi-métal en tant que mélange A,
(B) la préparation d'un mélange contenant au moins un solvant organique non complètement miscible avec l'eau, de l'eau et au moins un acide en tant que mélange B,
(C) la réunion des mélanges A et B, et la mise en réaction dudit au moins un composé précurseur dudit au moins un oxyde de métal et/ou de semi-métal avec ledit au moins un acide, afin d'obtenir un mélange C contenant une phase aqueuse contenant les particules sphériques et une phase organique,
(D) la séparation de la phase organique du mélange C obtenu à l'étape C, afin d'obtenir une phase aqueuse contenant les particules sphériques,
(E) éventuellement le traitement des particules sphériques obtenues à l'étape (D) avec au moins un acide, et
(F) le séchage des particules sphériques obtenues à l'étape (D) ou (E).

2. Particules selon la revendication 1, **caractérisées en ce que** ledit au moins un oxyde de métal et/ou de semi-métal est choisi dans le groupe constitué par SiO₂, Al₂O₃, TiO₂, MgO et leurs mélanges.

3. Particules selon la revendication 1 ou 2, **caractérisées en ce qu'**elles sont constituées d'au moins 96 % en poids de SiO₂.

4. Particules selon l'une quelconque des revendications 1 à 3, **caractérisées en ce que** ledit au moins un oxyde de métal et/ou de semi-métal est essentiellement amorphe.

5. Particules selon l'une quelconque des revendications 1 à 4, **caractérisées en ce que** la surface BET est de 500 à 600 m²/g.

6. Particules selon l'une quelconque des revendications 1 à 5, **caractérisées en ce que** le volume poreux est de 1,5 à 2,5 cm³/g.

7. Procédé de fabrication de particules sphériques selon l'une quelconque des revendications 1 à 6, comprenant les étapes suivantes :
(A) la préparation d'un mélange contenant au moins un solvant organique non complètement miscible avec l'eau, de l'eau et au moins un composé précurseur dudit au moins un oxyde de métal et/ou de semi-métal en tant que mélange A,
(B) la préparation d'un mélange contenant au moins un solvant organique non complètement miscible avec l'eau, de l'eau et au moins un acide en tant que mélange B,
(C) la réunion des mélanges A et B, et la mise en réaction dudit au moins un composé précurseur dudit au moins un oxyde de métal et/ou de semi-métal avec ledit au moins un acide, afin d'obtenir un mélange C contenant une phase aqueuse contenant les particules sphériques et une phase organique,
(D) la séparation de la phase organique du mélange C obtenu à l'étape C, afin d'obtenir une phase aqueuse contenant les particules sphériques,
(E) éventuellement le traitement des particules sphériques obtenues à l'étape (D) avec au moins un acide, et
(F) le séchage des particules sphériques obtenues à l'étape (D) ou (E).

8. Particules selon l'une quelconque des revendications 1 à 6 ou procédé selon la revendication 7, **caractérisés en ce que** ledit au moins un composé précurseur dudit au moins un oxyde de métal et/ou de semi-métal est choisi dans le groupe constitué par les silicates alcalins, par exemple le silicate de potassium et/ou le silicate de sodium, les silicates alcalino-terreux, les sols de silice colloïdaux et leurs mélanges.

9. Catalyseur particulaire contenant les particules sphériques selon l'une quelconque des revendications 1 à 6 et au moins un métal catalytiquement actif.

10. Utilisation de particules sphériques selon l'une quelconque des revendications 1 à 6 en tant que catalyseurs ou supports de catalyseurs.
